# EUROPEAN PATENT SPECIFICATION

(11) **EP 1 688 775 B1**
(45) Date of publication and mention of the grant of the patent: **08.12.2010**
(21) Application number: 06001623.5
(22) Date of filing: 26.01.2006
(51) Int. Cl.: G02B 26/08

(54) **Varifocal mirror and camera module comprising the same**
Varifokalspiegel und damit versehenes Kameramodul
Miroir progressif et module de caméra équipé de celui-ci

(30) Priority: 28.01.2005 KR 2005008235
(43) Date of publication of application: 09.08.2006
(73) Proprietor: LG Electronics Inc., Seoul 150-721 (KR)
(72) Inventor: Kim, Sang-Cheon 227-603 Saemteo Maeul Jugong Apt, Gyeonggi-do 412-717 (KR); Ji, Chang-Hyeon 3-1007, Samik Apt., Seoul 137-754 (KR); Bu, Jong-Uk 804-101, Jeongdeun Hanjin Apt., Gyeonggi-do 463-757 (KR); Moon, Hee-Jong 402, Park Town, Seoul 135-963 (KR)
(74) Representative: Beyer, Andreas

(56) References cited:
- US-A- 5 022 745
- US-A- 6 147 789
- US-A1- 2003 107 823
- US-A1- 2004 136 093
- US-A1- 2004 190 154
- US-A1- 2004 201 901
- US-A1- 2004 207 901
- US-B1- 6 513 939
- PATENT ABSTRACTS OF JAPAN vol. 012, no. 151 (P-699), 11 May 1988 (1988-05-11) & JP 62 269030 A (YASUSHI ISHII), 21 November 1987 (1987-11-21)

## Description

### BACKGROUND OF THE INVENTION

### Field of the Invention

The present invention relates to a varifocal mirror, and a camera module comprising the same. More particularly, the present invention relates to a varifocal mirror, and a camera module comprising the same, which embodies focus and optical zoom functions via actuation of the varifocal mirror instead of using an electromagnetic actuator, a step motor and the like for adjustment of lens units, thereby significantly reducing a volume of the overall system.

### Description of the Related Art

Recently, new technology for personal digital assistances integrating various functions such as information processing, computation, communication, input and output of image information, etc. therein has been developed with advances in communication technology and digital information processing technology. For example, there are PDAs incorporating a digital camera and a communication function therein, mobile phones incorporating the digital camera and functions of the PDAs therein, and the like. In this regard, it is common in market to incorporate a high performance digital camera module to the PDAs due to advances in digital camera technology and information storage capability.

As an image sensor of a mega pixel level has been employed for the digital camera module mounted on the PDAs and the like with advances of related technology, functions such as auto-focus and optical zoom have become more important. In order to realize the auto-focus and optical zoom functions in a minimized digital camera module, it is necessary to provide an actuator which can satisfy requirements such as rapid moving speed, low power consumption, large displacement, and the like while occupying a relatively small space in the camera module. Specifically, it is necessary to provide an actuator which can satisfy requirements corresponding to an increase in displacement resulting from advances in optical zoom function. In this regard, for a magnetic actuator such as a conventional voice coil motor (VCM), there are disadvantages of a limit in an increase of the displacement, and of great power consumption when operating the zoom function. In addition, for a rotatable actuator such as a stepping motor, which linearly moves a movable part by rotating a lead screw using, there are disadvantages such as a complicated actuating mechanism, friction and noise from a gear box, and the like. In addition, for an actuator employing both VCM and step motor, since it has a complicated structure, there are problems of high manufacturing costs, and of a limit in reduction of an actuator's size.

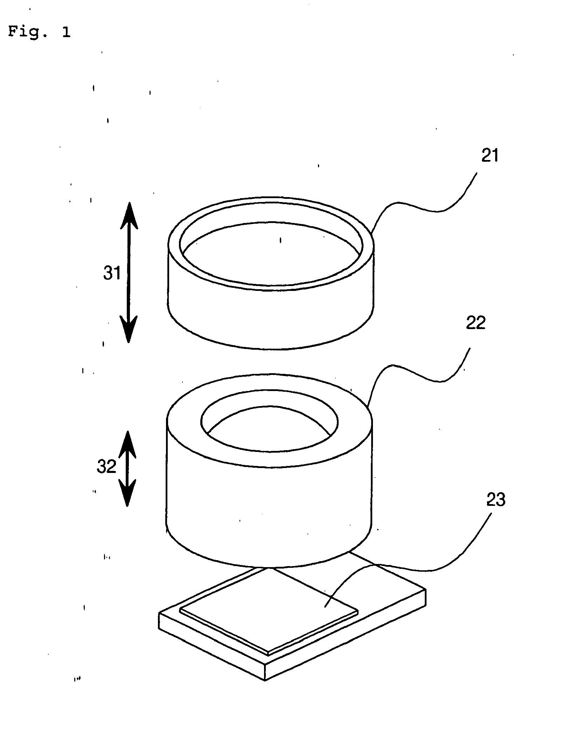

Fig. 1 is a diagram illustrating a conventional camera module which has optical zoom and auto focusing functions realized by two lens units. According to a conventional method, the lens units are shifted on an optical axis in order to realize such functions. If a zoom lens unit 21 is moved to a predetermined position to realize the optical zoom function, an auto-focus lens unit 22 is moved to a predetermined position determined according to the position of the zoom lens unit 21, and then forms an image on an image sensor 23. Generally, in such a two-lens unit type optical zoom camera module, it is necessary for the zoom lens unit to be moved in a relatively large range, and for the auto-focus lens unit to move rapidly. In addition, in order to improve the optical zoom function together with image quality, the actuator must satisfy more strict requirements.

US 2004/0190154 A1, US 2004/0136093 A1, US 2003/0107823 A1 and US 2004/0101901 describe mirrors with variable foci having curvatures which can be modified by using electrostatic, electromagnetic or piezo-electric devices.

US 5,022,745 discloses to use a mirror with a reflective surface on a thin membrane of a thin wafer connected to a thick wafer, wherein the membrane can be deformed by use of electrostatic force.

JP 62-269030 discloses to use a sensor with a bimetal and an oscillating string connected to the bimetal to detect temperature changes.

US 6 513 939 B1 discloses a varifocal mirror according to the preamble of claim 1.

### SUMMARY OF THE INVENTION

The present invention has been made to solve the above problems, and it is an object of the present invention to provide a camera module which has a varifocal mirror incorporated to an optical system thereof in order to realize an ultra-minimized optical zoom function.

It is another object of the present invention to provide the camera module which realizes an auto-focus function using the varifocal mirror.

It is yet another object of the present invention to provide the camera module which is minimized in size, and reduced in weight by integrating the varifocal mirror therein.

In accordance with one aspect of the present invention, the above and other objects can be accomplished by the provision of a varifocal mirror having the features set out in claim 1.

Preferably, the hetero-thermal expansion material lamination is attached to the thin film so as to be symmetrical with respect to a center of the thin film.

Preferably, either the thin film or the reflective plane is formed of a circular plate.

Preferably, the curvature of the thin film or the reflective plane varies asymmetrically with respect to a center thereof.

Preferably, the thin film is made of at least one material selected from the group consisting of silicon, silicon nitride, silicon oxide, dielectrics, ceramic, polymer, and metal.

Preferably, the reflective plane is made of at least one material selected from the group consisting of metal, dielectrics, and lamination of metal and dielectrics.

Preferably, the circumference of the thin film is partially connected to the substrate in a bridge structure such that the circumference of the thin film is supported by the substrate.

Preferably, the thin film and the reflective plane have shapes being flat or curved in an initial state not applying force to vary the curvature thereof.

In accordance with another aspect of the present invention, a camera module is provided, comprising: a varifocal mirror according to the present invention. Preferably, the camera module performs zoom adjustment and focus adjustment by changing curvatures of a thin film and a reflective plane in the varifocal mirror.

### BRIEF DESCRIPTION OF THE DRAWINGS

The foregoing and other objects and features of the present invention will be more clearly understood from the following detailed description taken in conjunction with the accompanying drawings, in which:
- Fig. 1: is a diagram illustrating a two-lens unit type optical zoom camera module;
- Figs. 2a to 2c: are perspective views illustrating the general structure of a varifocal mirror ;
- Figs. 3a to 3c: are cross-sectional views illustrating, for explanation purposes only and not forming a part of the invention, a varifocal mirror actuated using electrostatic force;
- Figs. 4a to 4c: are cross-sectional views illustrating a varifocal mirror actuated by various methods, wherein Figs. 4a and 4b are provided merely for explanation purposes, while Fig. 4c represents one embodiment of the present invention;
- Figs. 5a to 5c: are a plan view and cross-sectional views illustrating the varifocal mirror supported by a connecting member and actuated by electrostatic force, wherein Figs. 5a - 5c are provided merely for explanation purposes
- Fig. 6: is a diagram illustrating a camera module incorporating varifocal mirrors in accordance with one embodiment of the present invention; and
- Figs. 7a to 7c: are cross-sectional views illustrating a camera module incorporating a varifocal mirror in accordance with another embodiment of the present invention.

### DESCRIPTION OF THE PREFERRED EMBODIMENTS

Preferred embodiments of the present invention will be described in detail with reference to the accompanying drawings in which like components are denoted by the same reference numerals, and detailed description of well-known function and configuration making the subject matter of the present invention unclear will be omitted.

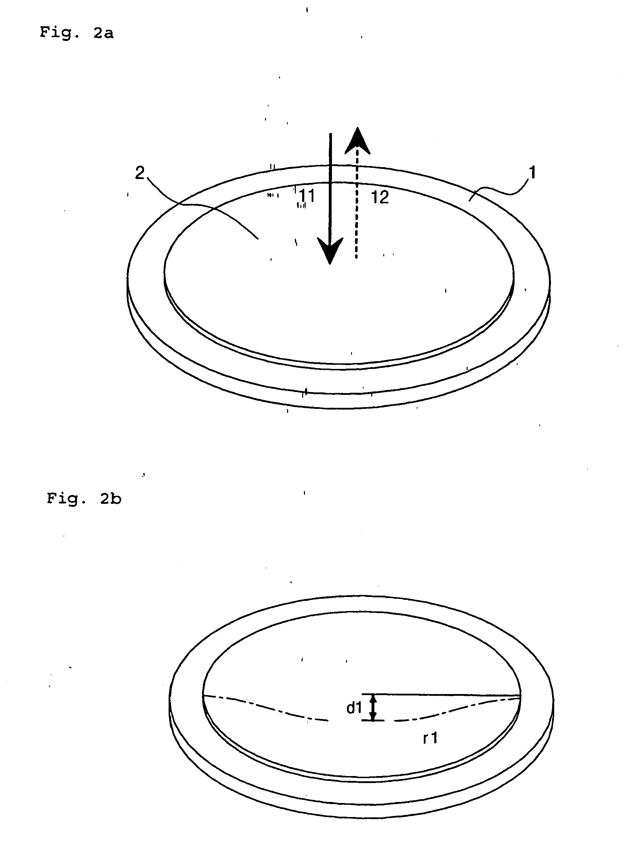

Figs. 2a to 2c are perspective views illustrating a varifocal mirror according to a comparative example.

According to this example, the varifocal mirror comprises a thin film, and a reflective plane.

Figs. 2a to 2c schematically show a method of stacking the thin film and the reflective plane, and a method of operating the varifocal mirror according to this embodiment.

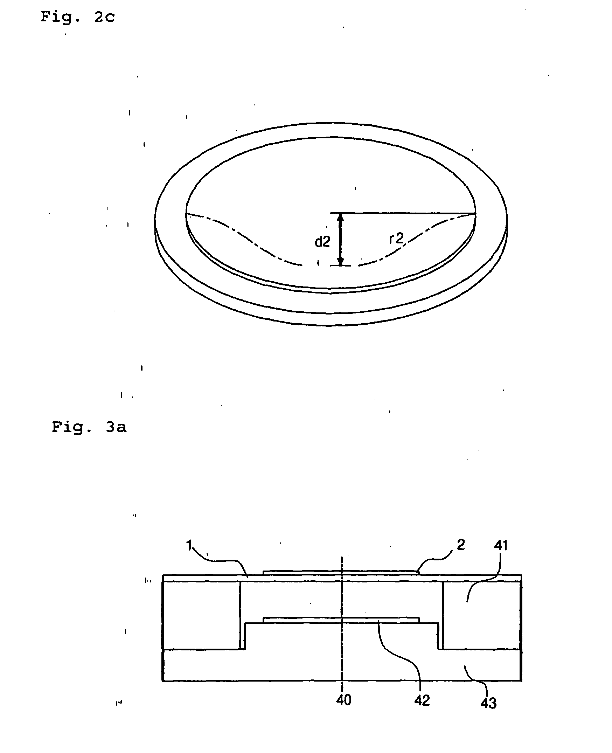

Referring to Fig. 2a, the varifocal mirror has the structure in which a reflective plane 2 is positioned on a circular thin film 1, and changes a focal length of reflected light 12 via variation in curvatures of the thin film 1 and the reflective plane 2. As shown in Figs. 2b and 2c, if the center of the reflective plane 2 is changed in position by d₁ or d₂ below a horizontal line, the radius of curvature thereof is varied to r₁ or r₂, so that the focal length of reflected light is changed. If the center of the reflective plane 2 is further lowered, the radius of curvature thereof is further increased, and the focal length of the reflected light is shortened in inverse proportion to an increase amount of the radius of curvature.

The varifocal mirror can be manufactured in various configurations using various materials by micromachining or fine machining, and can be actuated by various methods using electrostatic force, electromagnetic force, heat, piezoelectric force, and the like.

Figs. 3a to 3c are cross-sectional views illustrating the varifocal mirror actuated by electrostatic force.

The varifocal mirror actuated by the electrostatic force comprises a thin film, a reflective plane, an upper substrate, an electrode, and a lower substrate.

Figs. 3a to 3c schematically show a device for adjusting a focus of reflected light using electrostatic force generated between the thin film and the electrode or between the reflective plane and the electrode.

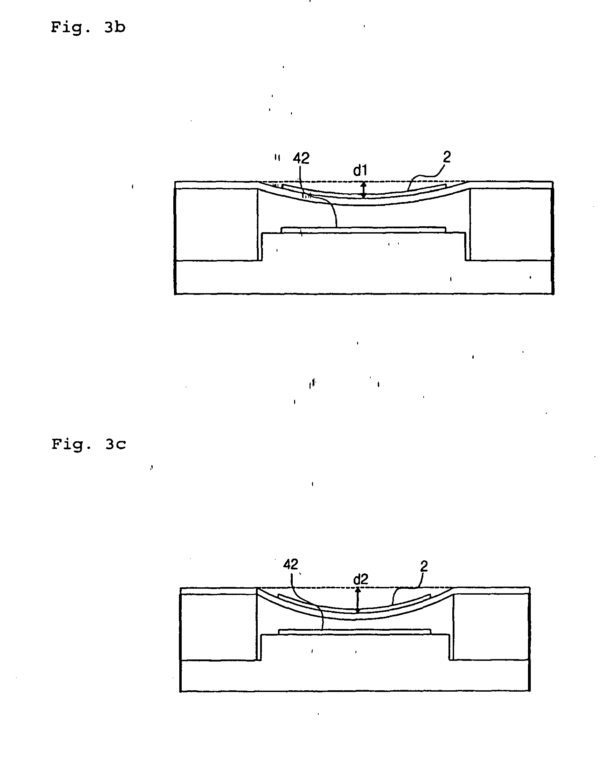

Figs. 3a to 3c show one example of the varifocal mirror which employs the electrostatic force for actuation thereof. As shown in Fig. 3a, the varifocal mirror is prepared by coupling an upper substrate 41 having a thin film 1 and a reflective plane 2 positioned thereon to a lower substrate 43 having an electrode 42 positioned thereon. The thin film 1 may be composed of various materials including ceramic materials such as silicon, silicon nitrides, and silicon oxides, and other materials such as dielectrics, ceramics, polymers, metals, etc. The reflective plane 2 may comprise a single or several layers of metal or dielectrics, or a lamination of metal and dielectrics. When manufacturing the varifocal mirror, it is possible to adjust an initial state of the reflective plane 2 by adjusting stress on the thin film 1 and the reflective plane 2. Thus, it is possible to manufacture the varifocal mirror so as to be free of an initial deflection as shown in Fig. 3a, or to manufacture the varifocal mirror so as to have a predetermined initial deflection d₁ as shown in Fig. 3b.

For the electrostatic force actuating type varifocal mirror, voltage is applied between the reflective plane 2 and the electrode 42. If the reflective plane 2 is made of any of the materials described above other than metal, it is necessary to form a metal layer on the thin film 1 for actuation. As potential difference between the reflective plane 2 and the electrode 42 is increased, the center of the reflective plane 2 is lowered as shown in Figs. 3b and 3c, and the radius of curvature thereof is increased.

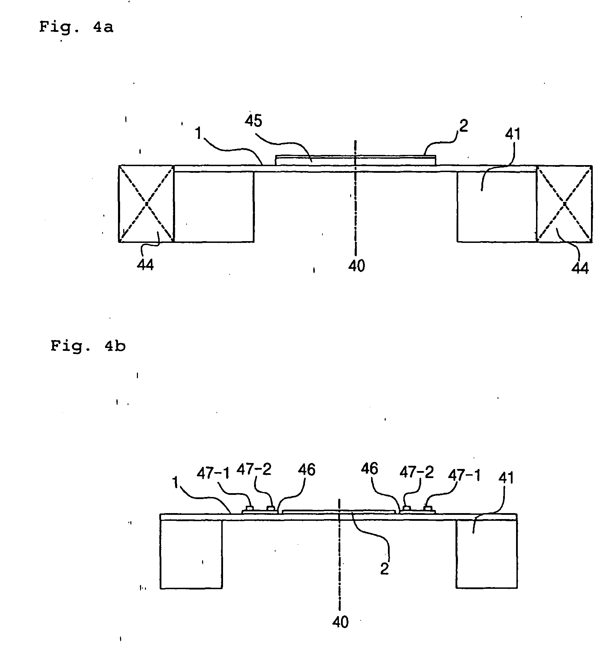

Figs. 4a to 4c are cross-sectional views illustrating a varifocal mirror actuated by various methods.

In Fig. 4a, the varifocal mirror is actuated using electromagnetic force, and comprises a thin film, a reflective plane, a substrate, a coil, and a magnetic member.

Fig. 4a schematically shows the varifocal mirror actuated by the electromagnetic force.

Referring to Fig. 4a, the varifocal mirror comprises a thin film 1 supported by a substrate 41, a magnetic member 45 stacked on the thin film 1, and a reflective plane 2 stacked on the magnetic member 45. The varifocal mirror further comprises a coil 44 wound around the substrate 41. When electric current flows through the coil 44, a magnetic field is generated around the coil 44. Here, the intensity of the magnetic field is proportional to the intensity of the electric current. The magnetic field applies force to, and moves the magnetic member 45. When the thin film 1 under the magnetic member 45 is lowered due to movement of the magnetic member 45, the reflective plane 2 is thus moved, and changes a focal length of light.

In Fig. 4b, the varifocal mirror is actuated by means of a piezoelectric member, and comprises a thin film, a reflective plane, a substrate, the piezoelectric member, and an electrode.

Fig. 4b schematically shows the varifocal mirror actuated by the piezoelectric member.

Referring to Fig. 4b, the varifocal mirror comprises a thin film 1, a reflective plane 2 stacked at a central region on the thin film, and a piezoelectric member 46 stacked on the thin film at a portion other than the reflective plane 2. The piezoelectric member is symmetrical with respect to a rotational axis 40. The varifocal mirror further comprises a pair of electrodes 47-1 and 47-2 to supply electric charges to the piezoelectric member 46. The piezoelectric member 46 can convert electric force to mechanical force, or vice versa. When potential difference is applied to the electrodes on the piezoelectric member 46, the piezoelectric member 46 is deformed, thereby enabling the curvature of the reflective plane 2 to be adjusted.

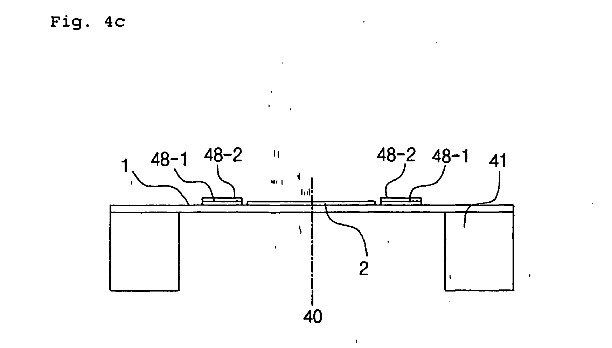

In Fig. 4c an embodiment of the present invention is shown. The varifocal mirror is actuated by means of a thermal expansion member, and comprises a thin film, a reflective plane, a substrate and a thermal expansion member.

Fig. 4c schematically shows the varifocal mirror actuated by the thermal expansion member.

Referring to Fig. 4c, the varifocal mirror comprises a thin film 1 supported by a substrate 41, a reflective plane 2 stacked at a central region on the substrate 41, and thermal expansion members 48-1 and 48-2 stacked on the thin film 1 outside the reflective plane 2. The thermal expansion members 48-1 and 48-2 are formed by stacking two materials having different thermal expansion coefficients. Preferably, the thermal expansion members 48-1 and 48-2 are symmetrical with respect to a rotational axis 40. The thermal expansion members 48-1 and 48-2 are subjected to volume change according to surrounding temperature. In this regard, since the materials constituting each of the thermal expansion members 48-1 and 48-2 have different thermal expansion coefficients, the thermal expansion members 48-1 and 48-2 extend in different lengths from each other. Thus, one of the thermal expansion members 48-1 and 48-2 is deflected towards the other having a lower thermal expansion coefficient, thereby enabling the curvature of the reflective plane 2 to be adjusted.

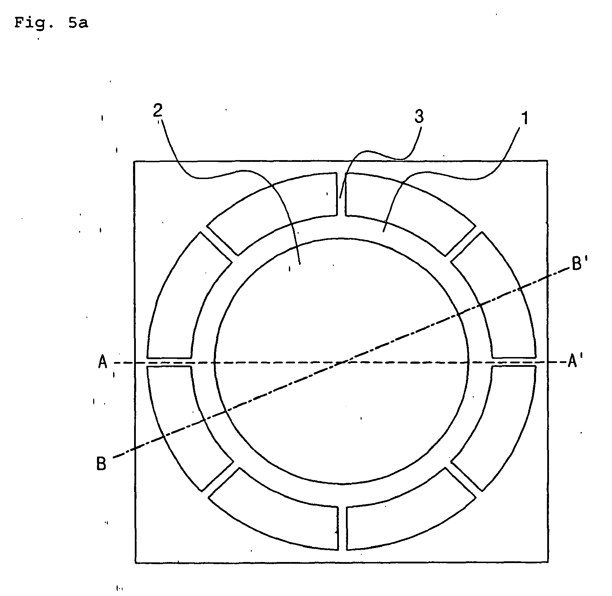

Figs. 5a to 5c are a plan view and cross-sectional views illustrating a varifocal mirror supported by a connecting member and actuated by electrostatic force.

This varifocal mirror comprises a bridge type thin film.

Referring to Fig. 5a, the thin film is constituted to have a bridge structure instead of a simple sheet shape. The varifocal mirror comprises a circular thin film 1 positioned at the center of a peripheral thin film, and a circular reflective plane 2 on the circular thin film 1 in which the thin film 1 is connected with the peripheral thin film by the connecting bridges 3, and supported thereby. Although the varifocal mirror is described as comprising the circular thin film supported at the center thereof by the connecting bridges in this embodiment, it should be understood that various modifications of this embodiment can be apparent to those skilled in the art.

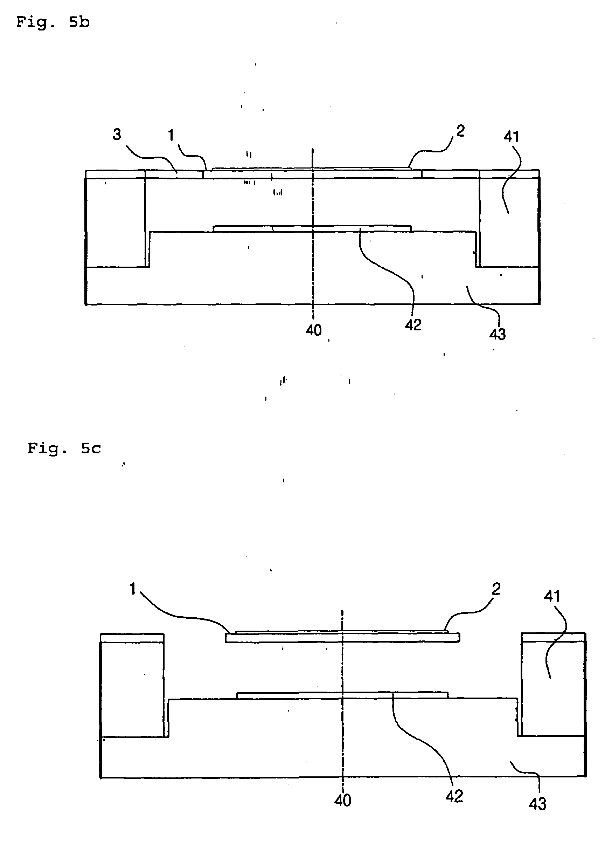

Fig. 5b is a cross-sectional view taken along line A-A' of Fig. 5a, in which the connecting bridges are shown. Fig. 5c is a cross-sectional view taken along line B-B' of Fig. 5a, in which the connecting bridges are not shown.

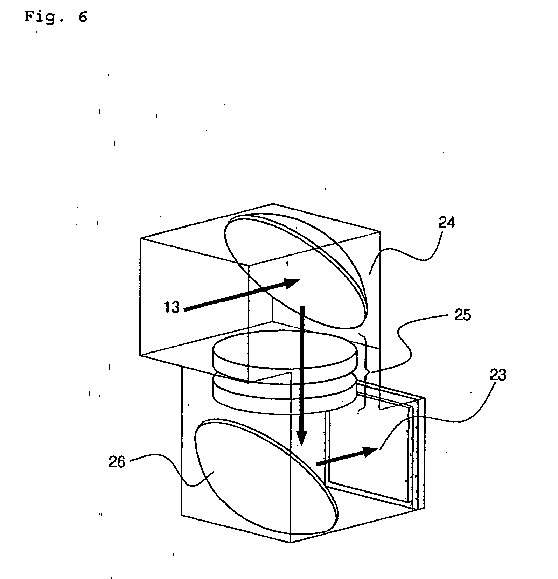

Fig. 6 is a diagram illustrating a camera module incorporating varifocal mirrors in accordance with one embodiment of the present invention.

According to this embodiment, the camera module comprises the varifocal mirrors, an optical system, and an image sensor.

Fig. 6 schematically shows a path of light focused on the image sensor by means of the varifocal mirror in the camera module according to this embodiment.

Referring to Fig. 6, the camera module employs an optical path 13 along which light is refracted twice until it reaches an image sensor 23 vertically positioned in the camera module. The camera module comprises two varifocal mirrors 24 and 26 positioned at refraction parts in the camera module to perform a focus adjustment function and an optical zoom function. An optical system 25 is positioned between the varifocal mirrors 24 and 26, and is prepared by employing a lens, a reflective plane, a filter, a mechanical shutter, a diaphragm, and the like. In addition, a suitable optical system may be optionally provided in front of the varifocal mirror 24 or between the varifocal mirror 26 and the image sensor 23. It is possible to selectively apply the focus adjustment and optical zoom functions using the varifocal mirrors to a camera module employing a conventional method for moving lens units. It is also possible to provide various optical paths in the camera module using the varifocal mirrors of the invention.

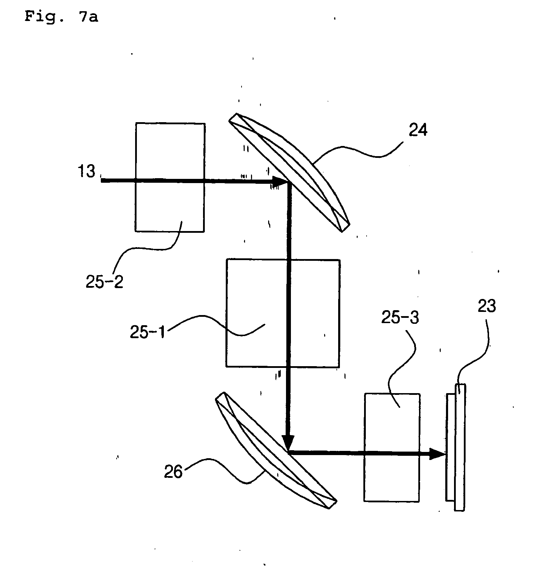

Figs. 7a to 7c are cross-sectional views illustrating a camera module incorporating varifocal mirrors in accordance with another embodiment of the present invention.

Fig. 7a shows an optical path 13 in a camera module, along which light is refracted twice by means of two varifocal mirrors as in the case shown in Fig. 6. In this embodiment, suitable optical systems 25-1, 25-2 and 25-3 are positioned at all suitable positions between an input end and an image sensor 23.

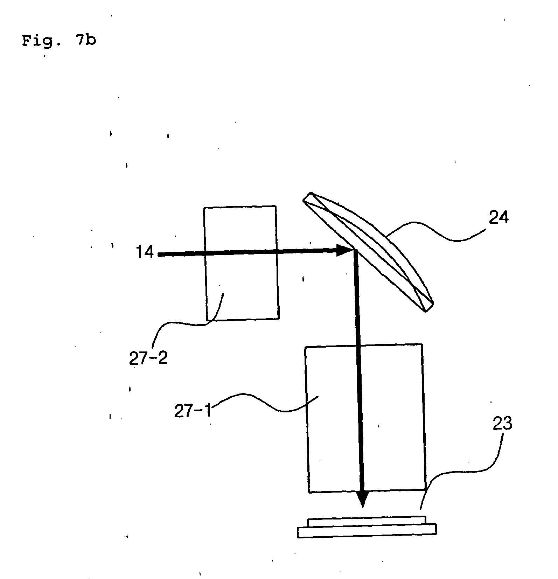

Fig. 7b shows an optical path 14 through which light is refracted once in a camera module, which comprises one varifocal mirror 24 for realizing one of the focus adjustment function or the optical zoom function, and an additional optical system 27-1 for realizing another function (for example, if the varifocal mirror 24 serves to provide the focus adjustment function, it serves to provide the optical zoom function). In this case, the optical system 27-1 performs the focus adjustment function or the optical zoom function in the manner of shifting the lens units by an actuator such as a step motor.

As apparent from the above description, since the camera module using the varifocal mirror according to the invention can realize the optical zoom function or the focus adjustment function without an additional actuator or a driving mechanism unlike a conventional camera module realizing these functions using the actuator or the driving mechanism such as a step motor, it can be easily reduced in size and weight.

In particular, since the camera module of the invention can satisfy requirement functions while occupying a minimum space, it can be suitably applied to various portable digital assistants, such as PDAs, mobile phones, and the like.

It should be understood that the embodiments and the accompanying drawings have been described for illustrative purposes and the present invention is limited by the following claims. Further, those skilled in the art will appreciate that various modifications, additions and substitutions are allowed without departing from the scope of the invention as set forth in the accompanying claims.

## Claims

1. A varifocal mirror, comprising:
- a substrate (41);
- a thin film (1) having a circumference supported by the substrate (41), and a variable curvature; and
- a reflective plane (2) attached to the thin film (1) to reflect light, and having a curvature varying in response to variation in curvature of the thin film (1), wherein the mirror further comprises thermal expansion members (48-1, 48-2) with a thermal expansion material lamination formed by stacking two materials having different thermal expansion coefficients in a vertical direction, and attached to the thin film (1), wherein the curvature of the thin film (1) varies via thermal expansion of the materials in the hetero-thermal expansion material lamination (48-1, 48-2), **characterized in that** the thermal expansion members (48-1, 48-2) are stacked on the thin film (1) outside the reflective plane (2).

2. The varifocal mirror according to claim 1,
wherein either the thin film (1) or the reflective plane (2) is formed of a circular plate.

3. The varifocal mirror according to claim 1,
wherein the curvature of the thin film (1) or the reflective plane (2) varies asymmetrically with respect to a center thereof.

4. The varifocal mirror according to claim 1,
wherein the thin film (1) is made of at least one material selected from the group consisting of silicon, silicon nitride, silicon oxide, dielectrics, ceramic, polymer, and metal.

5. The varifocal mirror according to claim 1,
wherein the reflective plane (2) is made of at least one material selected from the group consisting of metal, dielectrics, and lamination of metal and dielectrics.

6. The varifocal mirror according to claim 1,
wherein the hetero-thermal expansion material lamination (48-1, 48-2) is attached to the thin film (1) so as to be symmetrical with respect to a center of the thin film (1).

7. The varifocal mirror according to claim 1,
wherein the thin film (1) and the reflective plane (2) have shapes being flat or curved in an initial state not applying force to vary the curvature thereof.

8. A camera module comprising a varifocal mirror according to claim 1.

9. The camera module according to claim 8,
wherein the camera module performs either zoom adjustment or focus adjustment by changing curvatures of a thin film and a reflective plane in the varifocal mirror.

## Patentansprüche

1. Varifokalspiegel, mit:
- einem Substrat (41),
- einem Dünnfilm (1), dessen Umfang von dem Substrat (41) abgestützt wird und der eine veränderbare Krümmung hat, und
- einer Reflexionsfläche (2), die an dem Dünnfilm (1) zum Reflektieren von Licht angebracht ist und eine Krümmung hat, welche in Abhängigkeit einer Veränderung der Krümmung des Dünnfilms (1) variiert, wobei der Spiegel ferner an dem Dünnfilm (1) angebrachte thermische Expansionsglieder (48-1, 48-2) mit einer Schichtung aus thermischem Expansionsmaterial aufweist, die durch Stapeln zweier Materialien mit unterschiedlichen Wärmeausdehnungskoeffizienten in einer vertikalen Richtung gebildet ist, wobei die Krümmung des Dünnfilms (1) durch thermische Ausdehnung der Materialien in der Schichtung (48-1, 48-2) hetero-thermischer Expansionsmaterialien variiert,
**dadurch gekennzeichnet, dass** die thermischen Ausdehnungsglieder (48-1, 48-2) außerhalb der Reflexionsfläche (2) auf den Dünnfilm (1) geschichtet sind.

2. Varifokalspiegel nach Anspruch 1,
bei dem entweder der Dünnfilm (1) oder die Reflexionsfläche (2) aus einer kreisförmigen Platte gebildet ist.

3. Varifokalspiegel nach Anspruch 1,
bei dem die Krümmung des Dünnfilms (1) oder der Reflexionsfläche (2) asymmetrisch bezüglich eines Mittelpunkts des- bzw. derselben variiert.

4. Varifokalspiegel nach Anspruch 1,
bei dem der Dünnfilm aus wenigstens einem Material ausgewählt aus der Gruppe bestehend aus Silizium, Siliziumnitrid, Siliziumoxid, Dielektrika, Keramik, Polymer und Metall besteht.

5. Varifokalspiegel nach Anspruch 1,
bei dem die Reflexionsfläche (2) aus wenigstens einem Material ausgewählt aus der Gruppe bestehend aus Metall, Dielektrika und einer Schichtung aus Metall und Dielektrika besteht.

6. Varifokalspiegel nach Anspruch 1,
bei dem die Schichtung (48-1, 48-2) aus hetero-thermischem Expansionsmaterial so an dem Dünnfilm (1) angebracht ist, dass sie symmetrisch bezüglich eines Mittelpunkts des Dünnfilms (1) ist.

7. Varifokalspiegel nach Anspruch 1,
bei dem der Dünnfilm (1) und die Reflexionsfläche (2) in einem Ausgangszustand ohne Kraftaufbringung zum Verändern seiner bzw. ihrer Krümmung eine ebene oder gekrümmte Gestalt haben.

8. Kameramodul mit einem Varifokalspiegel nach Anspruch 1.

9. Kameramodul nach Anspruch 8,
bei dem das Kameramodul entweder eine Zoomeinstellung oder eine Entfernungseinstellung durch Ändern der Krümmung eines Dünnfilms und einer Reflexionsfläche des Varifokalspiegels ausführt.

## Revendications

1. Miroir à focale variable, comprenant :
- un substrat (41) ;
- un film mince (1) ayant une circonférence supportée par le substrat (41), et une courbure variable ; et
- un plan réfléchissant (2) fixé au film mince (1) pour réfléchir la lumière, et ayant une courbure variant en réponse à une variation de courbure du film mince (1), dans lequel le miroir comprend en outre des éléments de dilatation thermique (48-1, 48-2) avec une stratification de matériaux de dilatation thermique formée en empilant deux matériaux ayant des coefficients de dilatation thermique différents dans un sens vertical, et fixée au film mince (1), dans lequel la courbure du film mince (1) varie par la dilatation thermique des matériaux dans la stratification de matériaux de dilatation hétérothermique (48-1, 48-2),
**caractérisé en ce que** les éléments de dilatation thermique (48-1, 48-2) sont empilés sur le film mince (1) à l'extérieur du plan réfléchissant (2).

2. Miroir à focale variable selon la revendication 1,
dans lequel soit le film mince (1), soit le plan réfléchissant (2) est formé d'une plaque circulaire.

3. Miroir à focale variable selon la revendication 1,
dans lequel la courbure du film mince (1) ou du plan réfléchissant (2) varie asymétriquement par rapport à un centre de celui-ci.

4. Miroir à focale variable selon la revendication 1,
dans lequel le film mince (1) est constitué d'au moins un matériau choisi parmi le groupe consistant en le silicium, le nitrure de silicium, l'oxyde de silicium, un diélectrique, une céramique, un polymère et un métal.

5. Miroir à focale variable selon la revendication 1,
dans lequel le plan réfléchissant (2) est constitué d'au moins un matériau choisi parmi le groupe consistant en un métal, un diélectrique et une stratification de métal et de diélectrique.

6. Miroir à focale variable selon la revendication 1,
dans lequel la stratification de matériaux de dilatation hétérothermique (48-1, 48-2) est fixée au film mince (1) de façon à être symétrique par rapport à un centre du film mince (1).

7. Miroir à focale variable selon la revendication 1,
dans lequel le film mince (1) et le plan réfléchissant (2) ont des formes étant plates ou incurvées en un état initial sans application de force pour faire varier la courbure de ceux-ci.

8. Module de caméra comprenant un miroir à focale variable selon la revendication 1.

9. Module de caméra selon la revendication 8,
dans lequel le module de caméra effectue soit un ajustement de zoom, soit un ajustement de mise au point en changeant des courbures d'un film mince et d'un plan réfléchissant dans le miroir à focale variable.
